# EUROPEAN PATENT APPLICATION

(11) **EP 0 977 162 A2**
(43) Date of publication of application: **02.02.2000**
(21) Application number: 99305344.6
(22) Date of filing: 06.07.1999
(51) Int. Cl.: G07F 7/10

(54) **Self service terminal**

(30) Priority: 30.07.1998 GB 9816503
(71) Applicant: NCR INTERNATIONAL INC., Dayton, Ohio 45479 (US)
(72) Inventor: Monaghan, Andrew D., Dundee, Scotland DD2 1DS (GB)
(74) Representative: Cleary, Fidelma

(57) **Abstract**

A system (100) including a plurality of ATMs (102) and a method of transferring information within that system (100) are described. The ATMs (102) are connected to a host computer (104) by a bi-directional link (106), and the host computer (104) is connected to a management centre (108) by a uni-directional link (110). Each ATM (102) has a user interface (130) for enabling a user to interact with the ATM (102), a network card (140) for transferring information between the ATM (102) and the host (104), and a processor (138) for operating the user interface (130) and the network card (140). Each ATM (102) also has a pager unit (114), and the management centre (108) has a telephone (112) for transmitting information to each pager unit (114) via a cellular network pager provider (113). The system (100) thereby provides two-way communication between the management centre (108) and the ATMs (102) using wireless communication.

## Description

The present invention relates to a self-service terminal (SST) and to a system including a plurality of SSTs. In particular, the invention relates to an SST, such as an Automated Teller Machine (ATM) or a kiosk, for use in a system which only provides one way communication for part of the system.

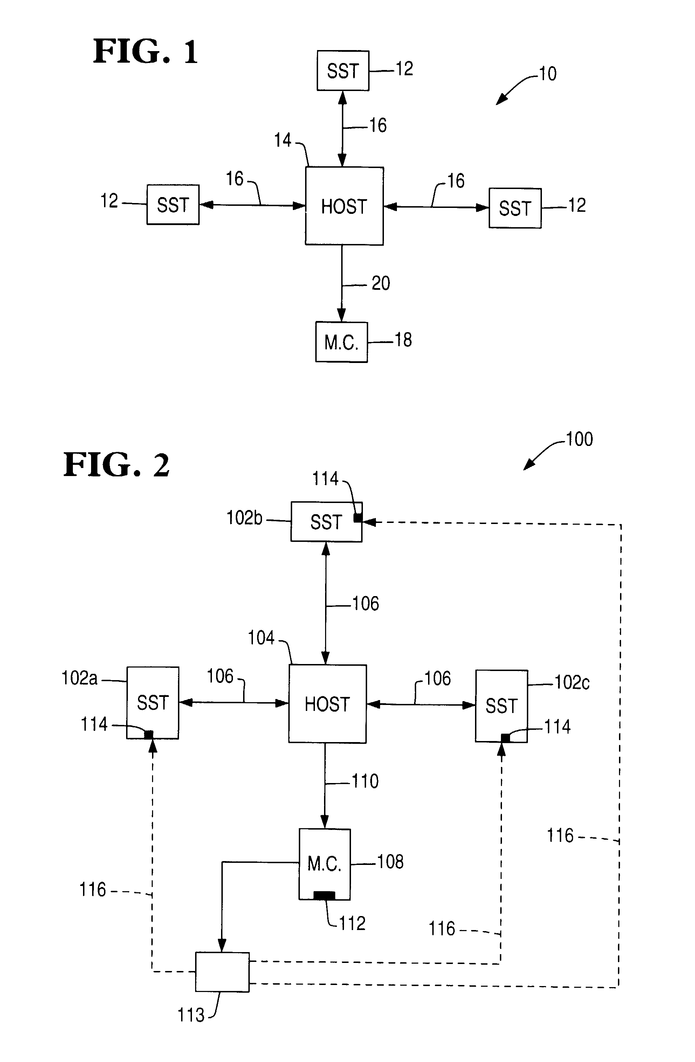

The physical architecture of one type of SST system is shown in Fig 1. The system 10 has a network of three SSTs 12 connected to a host computer 14 by two-way communications links 16 so that each SST 12 can send information to and receive information from the host computer 14. Although the information flow is bidirectional, the SSTs 12 cannot initiate communication with the host computer 14; the host computer 14 must initiate contact with the SSTs 12.

A management centre 18 is also connected to the host computer 14 but the connection is a one-way communication link 20. That is, the management centre 18 can only receive information from the host computer 14; it cannot send information to the host computer 14. The management centre 18 is a central monitoring and control system for receiving messages from the host computer 14 and for scheduling any corrective action required in response to those messages.

During operation of the system 10, the host computer 14 polls each of the SSTs 12 in the network in turn, and receives a status report from each SST 12. If the status reports indicate that one of the SSTs 12 is faulty then the host computer 14 sends a message to the management centre 18 indicating which SST 12 is faulty and, if known from the status report, the nature of the fault.

The management centre 18 arranges for a maintenance engineer to visit and repair the faulty SST 12. However, if a fault develops in an SST 12 immediately after that SST 12 has been polled then there may be a long delay between the fault developing and the host computer 14 notifying the management centre 18 of the fault. During this time the entire faulty SST 12, or one or more of its functions, may be shut down. If an SST 12 develops a fault and is geographically remote from a maintenance engineer then there may also be a long delay between notification of the fault and repair of the SST 12.

Another disadvantage associated with this type of system 10 is that if an SST 12 develops a fault then a maintenance engineer has to be dispatched to repair the faulty SST 12, even if the SST 12 only needs to be rebooted.

Some new systems for SSTs have different architectures to that shown in Fig 1 so that the network connecting the SSTs 12 to the host computer 14 enables the SSTs 12 to initiate communication with the host computer 14, but many systems still use the architecture of Fig 1 (sometimes called a legacy network because its architecture is obsolescent) because of the financial outlay involved in upgrading a network which may cover a large geographical area.

It is an object of the invention to obviate or mitigate one or more of the above disadvantages.

According to one aspect of the invention a self-service terminal comprises: a user interface for enabling a user to interact with the SST; communicating means for transferring information between the SST and a remote host computer; and a processor for operating the user interface and the communicating means; characterised in that the SST further comprises an information receiver in communication with the processor for receiving instructions via wireless communication and conveying these instructions to the processor.

By virtue of the invention, a management centre is able to send information to an SST via a wireless connection. This enables the management centre to send information to an SST at any time, so that if an SST becomes faulty, the management centre can convey instructions to the faulty SST. These instructions may require the SST to: shut down one or more of its functions (for example receipt printing); reboot; or execute a diagnostics program. In some circumstances this may obviate the need to dispatch a maintenance engineer. Thus, two-way communication is provided between the SSTs and the management centre without requiring any change to the physical network.

It will be understood that the term wireless communication refers to transmission and reception of information through, for example, the air rather than using a physical or tangible medium such as wire, cable, fibre optic, or such like. However, wireless communication may use a physical medium for part of the link, for example a first transmitter may transmit information via a cable to a second transmitter which then transmits that information through the air to a final receiver: this would be wireless communication between the first transmitter and the final receiver, even though it is not wireless communication between the first transmitter and the second transmitter.

Preferably, the information receiver is a pager unit having a unique telephone number.

Preferably, the pager unit is connected to the processor via an interface in the processor. Conveniently, the processor is a microcomputer and the pager unit is connected to a port of the microcomputer.

The information receiver may have a response facility to enable it to transmit a response indicating that a message has been received by the information receiver and/or that an instruction conveyed in the message has been executed by the processor.

Also, according to another aspect of the invention an SST system comprises: a plurality of SSTs; a host computer coupled to each of the SSTs by a two-way communication link; and a management centre coupled to the host computer by a one-way communication link for allowing transfer of information from the host computer to the management centre; characterised in that each SST has an information receiver for receiving instructions from the management centre via wireless communication; and the management centre has an information transmitter for selecting one of the SSTs and transmitting information thereto via wireless communication.

Further according to a further aspect of the invention there is provided a method of transferring information from a management centre to an SST, the management centre having an information transmitter and the SST having an information receiver, characterised by the step of transmitting information from the management centre to the SST using wireless communication.

Preferably, the step of transmitting information includes transmitting an instruction for commanding the SST to perform a predefined operation. A plurality of different instructions may be used, one for each predefined operation. For example, the predefined operation may be: a reboot operation for resetting the SST; a diagnostics operation for executing one or more pre-stored diagnostics programs and producing a status report; a remove from service operation for a facility such as cash dispensing, receipt printing, or such like; or a return to service operation for a facility such as cash dispensing, receipt printing, or such like.

Preferably, the method further comprises the step of the information receiver acknowledging via wireless communication receipt of the information transmitted by the information transmitter.

Preferably, the method further comprises the step of the information receiver acknowledging via wireless communication execution of the predefined operation.

In the accompanying drawings, Fig 1 is a block diagram of a prior art system having similar physical architecture to the invention.

An embodiment of the invention will now be described, by way of example, with reference to the rest of the accompanying drawings in which:
Fig 2 is a block diagram of an SST system according to one embodiment of the present invention in the form of an ATM system;
Fig 3 is a block diagram of an ATM used in the system of Fig 2;
Fig 4 is a block diagram of a management centre used in the system of Fig 2;
Fig 5 is a table illustrating part of the contents of a memory unit in the management centre of Fig 4; and
Fig 6 is a table illustrating another part of the contents of the memory unit of Fig 4.

Referring to Fig 2, which shows an ATM system 100, there are three ATMs 102 each connected in a network configuration to a host 104 by means of two-way communication links 106. A management centre 108 is connected to the host 104 by a one-way communication link 110 for enabling the host 104 to transfer information to the management centre 108.

The management centre 108 has an information transmitter 112 in the form of a telephone unit for connecting to a cellular network pager provider 113. Each of the ATMs 102 has an information receiver 114 in the form of a pager unit (such as a PCMCIA pager card), each pager unit 114 having a unique address (telephone number). The telephone unit 112 is operable to transmit information to each of the pager units 114 by wireless communication (the wireless communication links 116 are shown on Fig 2 by dotted lines). This is implemented by the telephone unit 112 dialling the telephone number of the appropriate pager unit 114 to be addressed (which is actually a telephone number of the cellular network pager provider 113) and transmitting digital code for that pager unit 114. The cellular network pager provider 113 receives the telephone call from the telephone unit 112 and addresses the corresponding pager unit 114 (addressed by the telephone unit 112) and transmits the information to that pager unit 114 over wireless link 116.

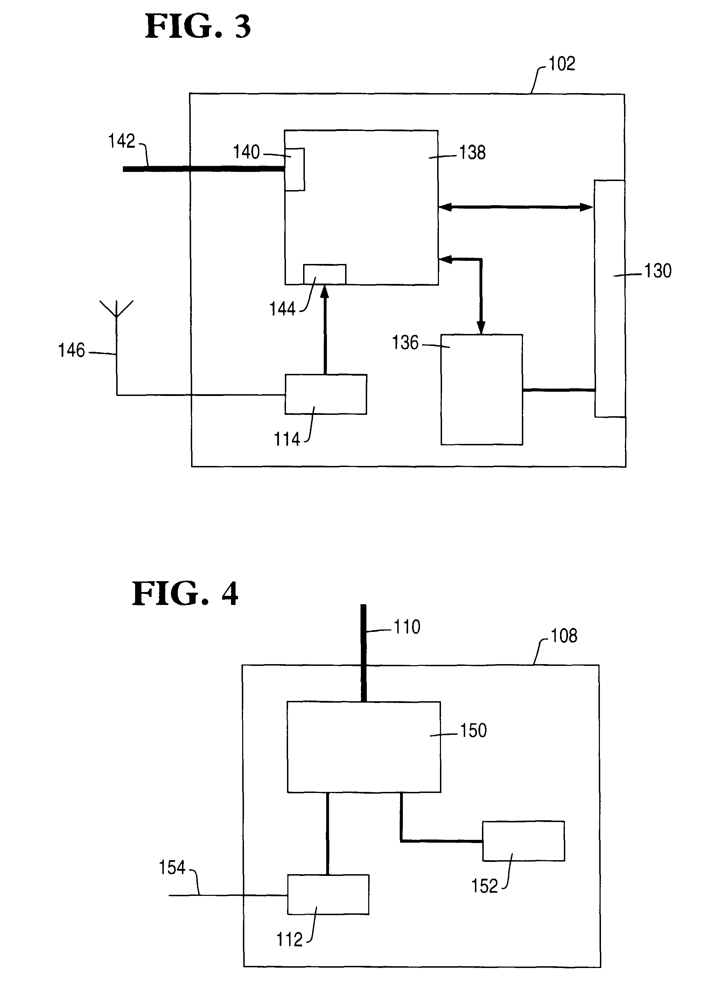

Fig 3 is a block diagram of one of the ATMs 102 of Fig 2. The ATM 102 comprises a user interface 130; modules 136 for operating functions available to a user; a pager unit 114; and a processor 138 for controlling the ATM 102.

The user interface 130 includes the following standard features (none of which is shown): a key pad, a display, a card reader slot, a printer receipt slot, and a currency dispensing slot.

The modules 136 include a receipt printer module, a card reader module, and a currency dispensing module (none of which is shown).

The processor 138 is a standard microcomputer having communicating means 140 for transferring information between the ATM 102 and the remote host computer 104. The communicating means 140 is in the form of a network communication card which is connected to a communication cable 142. The pager unit 114 is connected to a serial input/output port 144 of the microcomputer 138. The pager unit 114 also has an antenna 146 located on the outside of the ATM 102 for receiving ultra-high frequency signals from the telephone unit 112 located in the management centre 108.

Referring to Fig 4, the management centre 108 has a processor 150 (in the form of a microcomputer) which is connected to the one-way communication link 110 and also connected to a memory unit 152 and the telephone unit 112. The telephone unit 112 is adapted to connect to one of the input/output slots of the microcomputer 150 in a similar way to, for example, a fax/modem card. Telephone unit 112 has a fixed line 154 for transmitting ultra-high frequency signals to antenna 146 of pager 114 (Fig 3) via the cellular network pager provider 113 (Fig 2). The memory unit 152 may be a volatile memory which is loaded with data from a non-volatile memory during initialisation (booting up) of the microcomputer 150, or the memory unit 152 may be non-volatile (such as FLASH EPROM) memory.

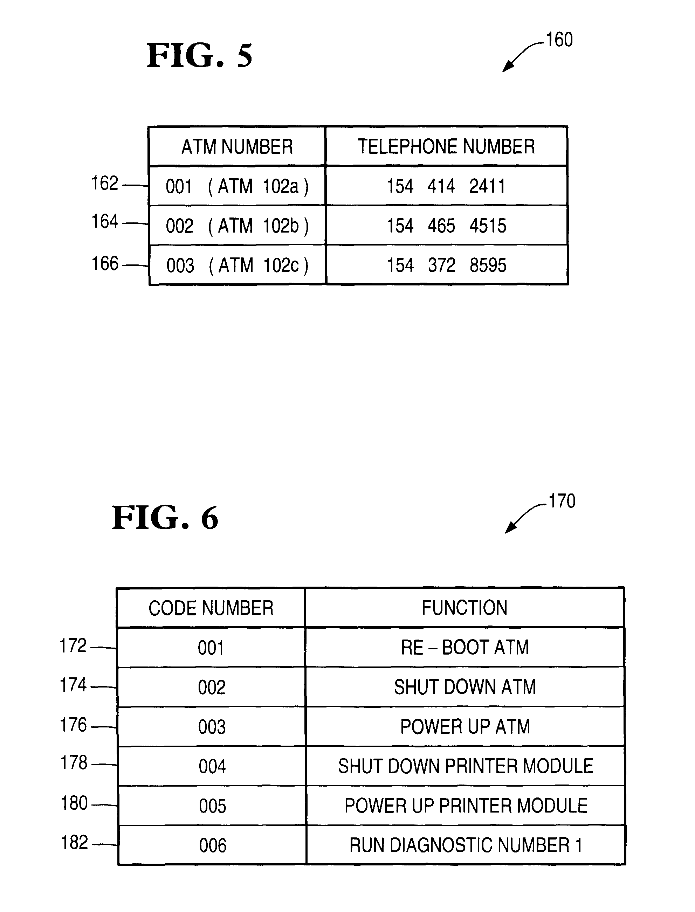

Figs 5 and 6 illustrate some of the information stored in memory unit 152. Fig 5 shows a table 160 having three entries 162,164,166, one for each of the ATMs 102a,b,c. For each ATM (e.g. 102a) there is a corresponding unique telephone number (e.g. 154 414 2411), which is the telephone number of the cellular network pager provider 113 for the pager unit 114 in that ATM 102a.

Fig 6 shows a table 170 having six entries (172 to 182), each entry representing a predefined operation and having a different code. For example, the predefined operation of shutting down the printer module (entry 178) has the code 004 (in binary "100"). The contents of table 170 are also stored in the microcomputer 138 of each ATM 102.

In use, the host 104 polls each of the ATMs 102 in turn to ensure that each ATM 102 is functioning correctly. In the event that one ATM (e.g. 102a) reports a fault, the host computer 104 transmits the status report for the faulty ATM 102a to the management centre 108. The management centre 108 automatically analyses the status report and schedules corrective action. For example, if the status report indicates that the printer module is not functioning correctly because it has run out of printer paper, the management centre 108 transmits a command to the ATM 102a to shut down the printer module. This is implemented by the processor 150 searching table 160 for the telephone number of the pager unit 114 of ATM 102a. Once the correct telephone number has been found (from entry 162) the microcomputer 150 then searches table 170 for the correct predefined operation code (entry 178) for shutting down the printer module. The microcomputer 150 instructs the telephone 112 to dial the correct telephone number and transmit the predefined operation code to the pager unit 114 via network provider 113.

The pager unit 114 of ATM 102a receives the predefined code via wireless link 116, and conveys the code to microcomputer 138. Microcomputer 138 searches its copy of table 170 to determine the function to be executed and then executes that function. Microprocessor 138 then instructs the pager unit 114 to send an acknowledgement to the telephone unit 112 to indicate that the code has been received and executed.

Various modifications may be made to the above described embodiment within the scope of the invention. For example, the pager unit 114 may be implemented as a personal computer card and incorporated within the microcomputer 138. Other types of wireless communication systems may be used rather than a telephone unit, a cellular network provider, and a plurality of pager units; for example the telephone unit may address the pager units directly, so that there is wireless communication for the whole (complete) link between the telephone unit and the pager units rather than for only part of the link (the cellular network provider to the pager units). In other embodiments, a radio-frequency transmitter and receiver unit may be used. The antenna 146 may be incorporated into a housing of the ATM 102. The SST may be a non-currency kiosk rather than an ATM. The number of entries in table 160 is determined by the number of SSTs in the system. The number of entries in table 170 is determined by the number of commands which the management centre may require, which may be greater or smaller than the six commands given in the specific embodiment.

## Claims

1. A self-service terminal (SST) (102) comprising:
a user interface (130) for enabling a user to interact with the SST (102);
communicating means (140) for transferring information between the SST (102) and a remote host computer (104); and
a processor (138) for operating the user interface (130) and the communicating means (140);
characterised in that the SST (102) further comprises an information receiver (114) in communication with the processor (138) for receiving instructions via wireless communication and conveying these instructions to the processor (138).

2. A terminal according to claim 1, wherein the information receiver (114) is a pager unit having a unique telephone number.

3. A terminal according to claim 1 or 2, wherein the pager unit (114) is connected to the processor (138) via an interface in the processor (138).

4. A terminal according to any one of the preceding claims, wherein the information receiver (114) has a response facility to enable it to transmit a response indicating that a message has been received by the information receiver (114).

5. A self-service terminal system (100) comprising:
a plurality of SSTs (102);
a host computer (104) coupled to each of the SSTs (102) by a two-way communication link (106); and
a management centre (108) coupled to the host computer (104) by a one-way communication link (110) for allowing transfer of information from the host computer (104) to the management centre (108);
characterised in that each SST has an information receiver (114) for receiving instructions from the management centre (108) via wireless communication; and the management centre (108) has an information transmitter (112) for selecting one of the SSTs (102) and transmitting information thereto via wireless communication.

6. An SST system (100) according to claim 5, wherein the information transmitter (112) is a telephone.

7. An SST system (100) according to claim 5 or claim 6, wherein the information receivers (114) are pager units.

8. A method of transferring information from a management centre (108) to an SST (102), the management centre (108) having an information transmitter (112) and the SST (102) having an information receiver (114), characterised by the step of transmitting information from the management centre (108) to the SST (102) using wireless communication.

9. The method of claim 8, wherein the step of transmitting information includes the step of transmitting an instruction for commanding the SST (102) to perform a predefined operation.

10. The method of claim 8 or 9, wherein the method further comprises the step of the information receiver (114) acknowledging via wireless communication receipt of the information transmitted by the information transmitter (112).
